# EUROPEAN PATENT APPLICATION

(11) **EP 2 660 817 A1**
(43) Date of publication of application: **06.11.2013**
(21) Application number: 13166069.8
(22) Date of filing: 30.04.2013
(51) Int. Cl.: G11B 5/31, H01F 41/14

(54) **Thin film with reduced stress anisotropy**

(30) Priority: 30.04.2012 US 201213460290
(71) Applicant: Seagate Technology LLC, Cupertino CA 95014 (US)
(72) Inventor: Zhu, Meng, Niskayuna, NY 12309 (US); Estrine, Eliot Lewis Cuthbert, Eden Prairie, Minnesota 55347 (US); Tian, Wei, Eden Prairie, Minnesota 55347 (US); Inturi, Venkateswara, Shakopee, Minnesota 55379 (US); Kautzky, Michael Christopher, Eagan, Minnesota 55122 (US)
(74) Representative: Miller Sturt Kenyon

(57) **Abstract**

An apparatus and associated method may provide a magnetic element can have a thin film deposited on a cryogenic substrate. The thin film can additionally be stress tuned during primary annealing to reduce unwanted stress anisotropy. The thin film can be configured to have near zero internal stress after the primary annealing.

## Description

### Summary

Various embodiments of the present disclosure are generally directed to a magnetic element that is capable of efficient data reading and recording from reduced form factor data storage devices. In accordance with various embodiments, a thin film deposited on a cryogenically cooled substrate can be stress tuned during primary annealing to reduce unwanted stress anisotropy and produce near zero internal thin film stress after the primary annealing.

### Brief Description of the Drawings

Embodiments of the present invention will now be described by way of example only and with reference to the accompanying drawings, in which:
FIG. 1 is a block representation of an example portion of a data storage device.
FIG. 2 generally illustrates a block representation of a portion of an example magnetic element capable of being used in the portion of the data storage device displayed in FIG. 1.
FIG. 3 graphs example stress characteristics for an example magnetic writing element.
FIG. 4 displays example stress characteristics for a given growth temperature for an example magnetic element.
FIG. 5 plots performance data generally associated with magnetic elements constructed and operated in accordance with various embodiments.
FIG. 6 graphs various operational characteristics of an example magnetic element.
FIG. 7 provides a flowchart of a magnetic element fabrication routine conducted in accordance with various embodiments.

### Detailed Description

Data storage device product design has focused on reducing the size of data bits while increasing data access rates from a data storage media in an effort to raise data capacity, transfer rates, and reliability. With such a reduction in size, data reading and writing components can be challenged to accurately perform, especially with respect to magnetic characteristics. That is, reducing the size of data access components can affect how those components behave, which can inhibit the writing and sensing of data bits.

The deposition of thin film materials may involve build-up of mechanical stress, which can adversely affect the performance of a magnetic element. Specifically, unwanted magnetic anisotropy can be generated by intrinsic stress present in deposited magnetic thin films. The residue stress in the films can also result in film delamination and cracking, which may produce reliability concerns for the devices. Thus, there is increasing industry interest in controlling the stress experienced by both magnetic and non-magnetic thin films in order to provide data elements that have minimal residue stress with maintained magnetic properties despite post deposition annealing.

Accordingly, soft magnetic thin films, such as magnetic shields and write poles, may be deposited on a cryogenic substrate to have the stress tuned during primary annealing to reduce unwanted stress anisotropy. The ability to control the stress experienced by the deposited thin film can allow for the construction of data elements that exhibit soft magnetic characteristics despite high temperature annealing while having reduced grain sizes. Such tuned stress for magnetic shields and poles further allows for high production rates and sustained resistance to elevated operating temperatures often encountered in reduced form factor data storage devices.

Stress present in sputtered thin films can originate from structural defects within the film, such as grain boundaries, dislocations, voids, and impurities, and from the interface between the film and substrate, such as lattice mismatch and difference in thermal expansion coefficient. At very low substrate temperatures, several effects can contribute to the change of stress in thin films deposited at such low substrate temperatures. First, backscattered Ar neutrals have a higher probability to become trapped and buried into the thin film matrix due at least in part to reduced mobility.

Second, when a thin film deposited on a cryogenically cooled substrate warms to room temperature, an annealing condition is effectively experienced in which different thermal expansion of film and substrate may result in irreversible residual stress. Third, the presence of tensile stress in a deposited thin film can result in micro-voids in the thin film, which strongly depend on sputtering pressure. At high sputtering pressures, the magnitude of energetic bombardment is also reduced due to gas scattering that can produce less dense films that are more likely to develop tensile stress.

As such, there are many factors that can contribute to the overall stress of thin films. Depositing thin films on a cryogenically cooled substrate can increase thermal stress in the thin film and provide a bigger knob to tune the stress through the adjustment of sputtering pressure and power to achieve close to zero stress in as-deposited or annealed thin films, while keeping a fully dense film structure.

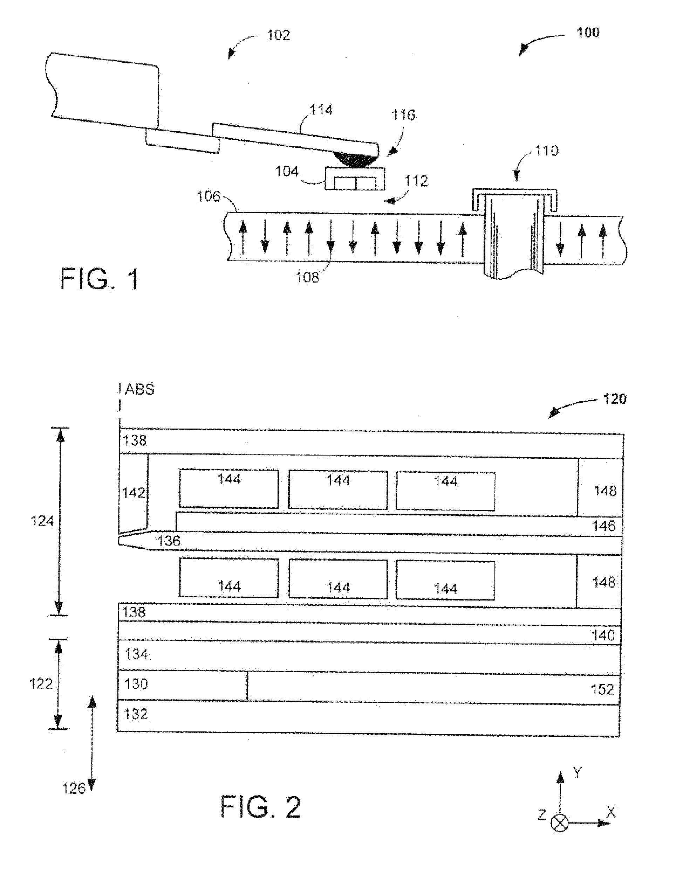

Turning to the drawings, FIG. 1 generally illustrates a portion of a data transducing element 100 of a data storage device. The transducing element 100 is shown in an environment in which various embodiments of the present disclosure can be advantageously practiced. It will be understood, however, that the various embodiments of this disclosure are not so limited by such environment and can be implemented to alleviate a variety of inadvertent magnetic flux generation conditions.

The transducing element 100 has an actuating assembly 102 that positions a transducing head 104 over programmed data bits 106 present on a magnetic storage media 108. The storage media 108 is attached to a spindle motor 110 that rotates during use to produce an air bearing surface (ABS) 112 on which a slider portion 114 of the actuating assembly 102 flies to position a head gimbal assembly (HGA) 116, which includes the transducing head 104, over a desired portion of the media 108.

The transducing head 104 can include one or more transducing elements, such as a magnetic writer and magnetically responsive reader, which operate to program and read data from the storage media 108, respectively. In this way, controlled motion of the actuating assembly 102 induces the transducers to align with data tracks (not shown) defined on the storage media surfaces to write, read, and rewrite data.

FIG. 2 displays a cross-sectional block representation of an embodiment of a transducing head 120 that is capable of being used in the actuating assembly of FIG. 1. The head 120 can have one or more magnetic elements, such as the magnetic reader 122 and writer 124, which can operate individually, or concurrently, to write data to, or retrieve data from, an adjacent storage media, such as media 108 of FIG. 1. Each magnetic element 122 and 124 is constructed of a variety of shields that act to define a predetermined data track 126 of the corresponding data media on which data bits are sensed and programmed by the respective magnetic elements 122 and 124.

The magnetic reading element 122, as shown, has a magnetoresistive layer 130 disposed between leading and trailing shields 132 and 134. Meanwhile, the writing element 124 has a write pole 136 and at least one return pole 138 that creates a writing circuit to impart a desired magnetic orientation to the adjacent storage media. While not limiting, some embodiments use the writing element 124 to write data perpendicularly to the adjacent data media. Such perpendicular recording can allow for more densely packed data bits, but can also increase the effect of EAW as multiple data bits can be concurrently influenced by residual magnetic flux.

In another non-limiting embodiment, the writing element 124 can include at least two return poles 138 positioned contactingly adjacent a non-magnetic spacer layer 140 and an air bearing surface (ABS) shield 142. The writing element 124 may further include a coil 144 that can be one or many individual wires and a yoke 146 that attaches to the write pole 136 and operates with the coil 144 to impart a magnetic flux that travels from the write pole 136 through conductive vias 148 to conclude at the return poles 138. It should be noted that the various aspects of the head 120 can be characterized as either uptrack or downtrack, along the Y axis, depending on the motion of the head.

As deposited, the microstructure of grains in the soft magnetic materials that develop in the magnetic shields 126 and 132 and the magnetically active structure 128, especially when deposited on a cryogenic substrate, can affect the stresses and magnetic properties, namely anisotropy, experienced by the deposited layer as it warms either through natural or artificial annealing. While artificial high temperature annealing, such temperatures above 400°C, may contrast naturally allowing deposited films to warm from cryogenic to room temperatures, the ability to tune stress in the deposited layers allows for the production of near zero stress by minimizing the development of unwanted stress anisotropy.

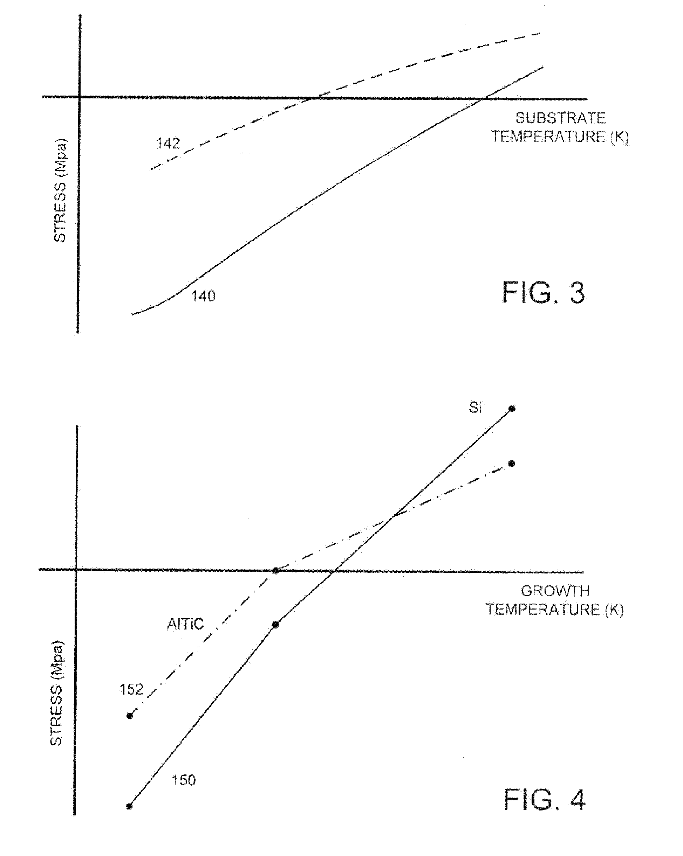

FIG. 3 plots stress of an example data transducer as the substrate temperature elevates in accordance with various embodiments. Solid line 140 graphs the stresses of a soft magnetic thin film deposited with 8000W, 50 sccm Ar flow sputtering on a substrate having a variety of temperatures ranging from cryogenic, ∼50 K, to room, ∼300 K. Similarly, segmented line 142 shows the stresses of another soft magnetic film deposited with 5000W, 70 sccm Ar flow sputtering for the variety of substrate temperatures. Each line 140 and 142 illustrate that when a soft magnetic material is deposited at a cryogenic substrate temperature, the films tend to experience compressive stress whereas room temperature substrate deposition corresponds with tensile stresses.

FIG. 4 graphs stress of another example data transducer thin film layer as deposited on different substrate materials. Solid line 150 shows the stresses associated with deposition of a soft magnetic layer on a Silicon substrate at approximately 50 K, 150 K, and 300 K. Segmented line 152 plots stress for soft magnetic layers deposited on AlTiC controlled to the same various substrate temperatures as line 150. The data of FIG. 4 generally displays how substrate material can contribute to thermal stresses experienced as the film warms to room temperature. Analysis of the thermal stress in the film due to the difference in coefficients of thermal expansion (CTE) between the substrates and the film indicate that thermal stress may comprise of a significant portion of the total residue stress and the control of deposition temperature can effectively tune the film stress. While thermal stress is not the only parameter that contributes to the stress of a deposited layer, the ability to select substrate material can be used selectively with deposition power and flow rate to allow for the tuning of stress in the film to produce a near zero room temperature stress and reduce unwanted stress anisotropy.

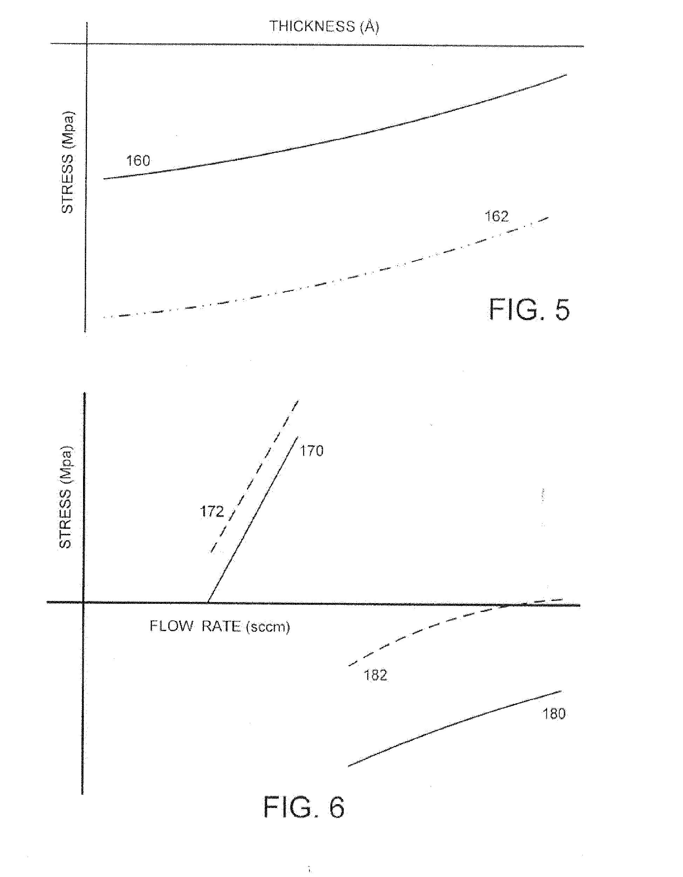

FIG. 5 plots thin film stress as a function of film thickness for a soft magnetic layer cryogenically deposited in accordance with various embodiments. Solid line 160 graphs a layer deposited at 5 kW, 70 Ar flow sccm with a thickness ranging from 1000 Ǻ to 10000 Ǻ while segmented line 162 provides data for a layer deposited at 8 kW, 50 Ar flow sccm. The lines 160 and 162 illustrate how compressive forces in a deposited layer relax as the thickness of the layer increases. While the cause of such relaxation may be due to a multitude of reasons, such as increased substrate temperature for longer sputtering, the thickness of the layer to be deposited can be factored into the tuning of the substrate material, deposition power, and deposition flow rate to reduce the development of unwanted stress anisotropy.

FIG. 6 provides stress measurements for soft magnetic layers deposited with varying flow rates and annealing conditions. The solid line 170 and segmented line 172 respectively plot stress associated with the deposition a layer with and without a 225 °C for 2 hour anneal and with a deposition power of 3 kW. Meanwhile, solid and segmented lines 180 and 182 respectively graph stress for non-annealed and annealed layers with each layer being deposited with 8 kW power.

The presence of above room temperature artificial annealing is illustrated in FIG. 6 as increasing the stress experienced by a deposited layer. The difference between segmented lines 172 and 182 illustrate how sputtering power can drastically alter the stress regime (tensile vs. compressive) regardless of the flow rate or the presence of above room temperature annealing. However, in various embodiments, sputtering power, flow rate, and annealing are respectively used to produce a magnetic element with close to zero stress that corresponds to reduced noise due to the decrease in stress induced anisotropy.

For example, line 182 shows how an 8kW sputtering power and approximately 50 sccm air flow rate produce a near zero stress subsequent to artificial annealing, but not as deposited, as shown by line 180. The tuning of stress with flow rate can concurrently provide a predetermined film roughness. As such, adjustment of flow rate can simultaneously provide predetermined stress and surface roughness. As an example, flow rate can be kept low while substrate temperature increases to produce material properties simultaneously with near zero stress.

With the ability to tune stress for a given soft magnetic thin film based on a variety of parameters, deposition power and flow rate, thickness, substrate temperature, and annealing, stress induced anisotropy can be minimized. As such, substrate temperature provides a knob that can be manipulated, much as deposition power and flow rate, to form a soft magnetic thin film with close to zero residue stress to avoid unwanted stress-induced anisotropy that may correspond with improved reliability of the thin films.

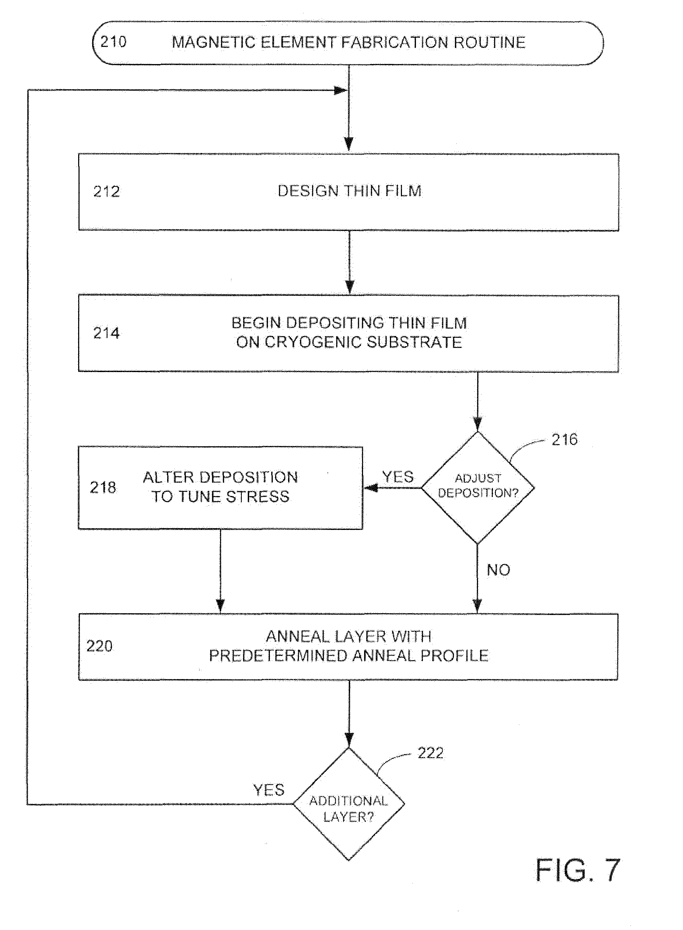

While not required or limited to a particular manner for forming a soft magnetic thin film to be used in a data writing element, FIG. 7 provides an example magnetic element fabrication routine 210 performed in accordance with various embodiments. The routine 210 may begin by evaluating a number of different factors. For instance, the thin film's purpose, material, and configuration can be determined in step 212. The purpose of the soft magnetic thin film can be conducted simultaneously or successively with the assessment of magnetic performance criteria, which can determined a predetermined residue stress corresponding to the deposition pressure, deposition power, substrate temperature, and thickness corresponding to the layer's purpose.

Step 212 may further evaluate and determine how and if the thin film is to be annealed. While an annealing condition may take place as the deposited layer naturally warms from cryogenic temperatures to room temperature, step 212 may further evaluate if an above room temperature anneal would tune stresses present in the film. With the various aspects of the layer being designed in step 212, step 214 begins depositing the thin film on a cryogenic substrate, such as substrate 122 of FIG. 2. That is, the substrate is cooled and maintained at a cryogenic temperature while the film is deposited to have a tuned stress corresponding to at least the substrate temperature, deposition flow rate, deposition power, and layer thickness.

As the layer is being deposited in step 214, decision 216 determines if any aspect of the deposition process is to be adjusted. For example, if the deposition power and air flow rate are to be changed to provide more or less compressive stresses on the thin film. If the deposition manner started in step 214 is to be altered, step 218 conducts those alterations to further tune the stress experienced by the film. At the conclusion of the adjustment of the deposition, or in the event no adjustment is chosen in decision 216, step 220 begins to anneal the thin film with the anneal profile determined in decision 216. The annealing profile may solely involve the natural warming of the layer from cryogenic to room temperature, or include additional above room temperature annealing, such approximately 225 °C annealing for two hours.

The annealing of the thin film in step 220 can be followed by decision 222 in which the construction of additional layers is contemplated. If more layers are chosen, the routine begins anew with step 212. However, if no additional layers are to be formed, the routine 210 can terminate or transition to another aspect of manufacturing, such as assembly and packaging.

With the various decisions and steps provided by routine 210, a magnetic reading and writing element may be fabricated with a wide variety of parameters that are tuned to have a near zero stress with the reduction of unwanted stress induced anisotropy However, the routine 210 is not limited to the process shown in FIG. 7 as the various decisions and steps can be omitted, changed, and added. For example, decision 216 may be conducted prior to any annealing in step 220 so that a plurality of films are annealed collectively.

It can be appreciated that the configuration and material characteristics of the magnetic element described in the present disclosure allows for enhanced magnetic reading and programming by providing a soft magnetic thin film that has magnetic properties favorable to use in high areal density data storage devices. Moreover, the ability to tune and optimize the internal stress of various layers can allow for precise reduction of stress induced anisotropy and increase mechanical properties of the films. In addition, while the embodiments have been directed to magnetic programming, it will be appreciated that the claimed technology can readily be utilized in any number of other applications, such as data sensing and solid state data storage applications.

It is to be understood that even though numerous characteristics and advantages of various embodiments of the present disclosure have been set forth in the foregoing description, together with details of the structure and function of various embodiments, this detailed description is illustrative only, and changes may be made in detail, especially in matters of structure and arrangements of parts within the principles of the present disclosure to the full extent indicated by the broad general meaning of the terms in which the appended claims are expressed. For example, the particular elements may vary depending on the particular application without departing from the spirit and scope of the present technology.

## Claims

1. A data storage device comprising a thin film deposited on a cryogenic substrate and stress tuned during primary annealing to reduce unwanted stress anisotropy.

2. The data storage device of claim 1, wherein the cryogenic substrate is a substrate cooled to a temperature below room temperature.

3. The data storage device of claim 2, wherein the temperature is approximately 50 Kelvin.

4. The data storage device of any one of the preceding claims, wherein the thin film is a single continuous magnetic shield layer.

5. The data storage device of any one of the preceding claims, wherein the thin film is stress tuned by adjusting sputtering pressure.

6. The data storage device of claim 5, wherein the sputtering pressure is adjusted in response to warming the thin film to room temperature.

7. The data storage device of any one of the preceding claims, wherein the thin film is stress tuned in response to the thickness of the thin film.

8. The data storage device of any one of the preceding claims, wherein the thin film is stress tuned to maintain a compressive load while the thin film is heated.

9. The data storage device of any one of the preceding claims, wherein the thin film is stress tuned by adjusting sputtering power.

10. The data storage device of any one of the preceding claims, wherein the thin film has a near zero stress at room temperature after the primary annealing.

11. The data storage device of any one of the preceding claims, wherein secondary annealing is conducted at approximately 225 degrees Celsius after the primary annealing is conducted.

12. The data storage device of claim 11, wherein the secondary annealing is conducted for approximately 2 hours.

13. An magnetic element comprising a first thin film adjacent a second thin film, the first and second thin films each formed on a cryogenic substrate and stress tuned with variable sputtering pressure during primary annealing to provide near zero thin film stress.

14. The magnetic element of claim 13, wherein the near zero thin film stress is at approximately room temperature.

15. The magnetic element of claim 13 or claim 14, wherein the sputtering pressure is tuned between 50 and 90 sccm.

16. The magnetic element of any one of claims 13 to 15, wherein the first and second thin films are formed separately.

17. A method comprising:
cooling a substrate to a cryogenic substrate temperature;
depositing a first thin film on the substrate; and
tuning stress of the first thin film during primary annealing to reduce unwanted stress anisotropy.

18. The method of claim 17, wherein the primary annealing is from a cryogenic temperature to room temperature.

19. The method of claim 17 or claim 18, further comprising forming a second thin film on the substrate with the tuned shield stress to increase adhesion and reduce delamination.

20. The method of claim 19, wherein the stress is tuned while the second thin film is heated above room temperature.
